# FASCICULE DE BREVET EUROPEEN

(11) **EP 0 603 065 B1**
(45) Date de publication et mention de la délivrance du brevet: **16.08.1995**
(21) Numéro de dépôt: 93403028.9
(22) Date de dépôt: 14.12.1993
(51) Int. Cl.: H04L 29/06, G06F 13/12

(54) **Dispositif de connexion d'un appareil à un canal de transmission**
Vorrichtung zum Anschluss eines Terminals an einen Übertragungskanal
Device for the connection of a terminal to a transmission channel

(30) Priorité: 14.12.1992 FR 9215039
(43) Date de publication de la demande: 22.06.1994
(73) Titulaire: SGS-THOMSON MICROELECTRONICS S.A., 94250 Gentilly (FR)
(72) Inventeur: Le Van Suu, Maurice, F-75116 Paris (FR)
(74) Mandataire: Schmit, Christian Norbert Marie

(56) Documents cités:
- MINI MICRO CONFERENCE RECORD Novembre 1983 , NEW YORK US pages 1 - 18 V. COLEMAN ET AL. 'THE IMPLEMENTATION OF ETHERNET/IEEE 802.3 IN VLSI'
- INTERFACES IN COMPUTING vol. 3, no. 3/4 , Septembre 1985 , LAUSANNE, SWITZERLAND pages 173 - 187 R.W. DOBINSON ET AL. 'INTERFACING TO ETHERNET USING VLSI PROTOCOL CHIPS'
- WESCON '82 Septembre 1982 , CA, US pages 20-5.1 - 20-5.8 H.L. LOGAN ET AL. 'A FLEXIBLE COMMUNICATIONS CONTROLLER THROUGH VLSI'

## Description

La présente invention a pour objet un dispositif de connexion d'un appareil à un canal de transmission utilisable dans le domaine de la domotique. Ce domaine promis à un grand avenir a pour objet, à l'intérieur des habitations humaines, de relier entre eux les divers appareils utilisant l'électricité entre eux, de manière à gérer au mieux l'utilisation de ces appareils. Parmi ces appareils on notera aussi bien des installations de chauffage central (par exemple électrique ou à eau chaude), des installations de réception d'émissions radiodiffusées, des installations de communication, ainsi que divers appareils électroménagers, notamment les congélateurs et les machines à laver. On peut également noter les installations de surveillance, et de transmission d'alarme en cas d'incendie ou d'effraction.

Les professionnels étudiant ces questions de liaisons domotiques se sont réunis et ont établi une norme régissant les conditions dans lesquelles des signaux, des données ou des commandes, devraient être transmis. Ils ont définis dans ce but cinq canaux de transmission qui sont les suivants: la transmission par courant porteur, la transmission par rayonnement infrarouge, la transmission radioélectrique, la transmission par paire torsadée, ainsi que la transmission par câble coaxial. Pour chaque canal de transmission, la norme définit la liaison physiquement ainsi que temporellement. Ceci signifie que les signaux de reconnaissance à l'établissement d'une communication doivent souscrire à des protocoles particuliers d'émission et de réception. Par ailleurs, dans chaque canal il est prévu des vitesses de transmission qui peuvent varier, les vitesses lentes étant utilisables en particulier lorsque le canal de transmission n'est pas de bonne qualité : surtout quand il est bruité.

Les appareils qui sont destinés à être reliés à de telles installations sont munis, par principe, d'un microprocesseur, ou d'un microcircuit, capable de faire exécuter à l'appareil des instructions qui lui ont été transmises par le canal ou, en sens inverse, de transmettre au canal à destination d'une station d'alarme, des indications relatives à la bonne marche de l'appareil. Parmi les utilisations possibles, on imagine notamment que des installations de chauffage électrique peuvent être à démarrage décalé dans le temps, à l'initiative du fournisseur d'électricité (une société concessionnaire de la production d'électricité), afin de limiter l'amplitude des appels de courant auxquels des centrales électriques ont du mal à faire face lorsque, pour des fins d'émission de télévision notamment, l'ensemble des habitants d'une région, voire d'un pays, se mettent à consommer. Le temps de démarrage d'une centrale étant de l'ordre d'une demi-heure, il serait notamment possible avec de telles installations d'étaler dans le temps des appels de courant de manière à ce que ceux-ci correspondent à la montée en puissance de la centrale. Ainsi, un tel microprocesseur gérant une installation de chauffage dans une maison ne démarrerait le chauffage et donc la consommation d'électricité que sur plage de tarification préférentielle ou consécutivement à un ordre prédéterminé à partir du réseau électrique.

Pour qu'un tel système soit utilisable il faut que les dispositifs de connexion des appareils aux canaux de transmission respectent ces normes.

On a alors été conduits à réaliser, dans un premier temps, des circuits câblés permettant de faire le couplage du microprocesseur de l'appareil au canal de transmission. Compte tenu de la diversité des microprocesseurs utilisables, ainsi que de la multiplicité des canaux de transmission possibles (cinq canaux sans compter les adaptations de vitesse, ainsi que le type de codage des signaux de données), le développement de cette industrie est freiné par la complexité de sa mise en oeuvre.

Pour tenter de remédier à cet inconvénient, dans une première demande de brevet français N° 92 05423 (FR-A-2690766) déposée le 30 Avril 1992 par le présent demandeur, il a été imaginé un circuit de connexion utilisant le microprocesseur de l'appareil de telle façon que ce microprocesseur soit capable de faire exécuter, en plus des instructions imposées à l'appareil, des instructions de configuration de la connexion de manière à s'adapter au canal. Cette solution imaginée avait le mérite de supprimer la présence des circuits câblés dont le fonctionnement était trop lié aux conditions d'utilisation et dont le développement était laborieux. Ce faisant, cette solution imaginée présente un inconvénient qui est celui de nécessiter, pour tous les concepteurs d'appareils, la connaissance de la norme de connexion de manière à ce qu'ils prévoient dans le microprocesseur de leur appareil un jeu d'instructions qui conviennent à la réalisation de la connexion de l'appareil au canal. Ceci est malheureusement difficile à mettre en oeuvre, surtout maintenant, où cette industrie est en passe de s'implanter, et où la norme est peu connue. Cette norme est complexe: son contenu rassemblé dans un document ayant la taille d'un bon dictionnaire.

Notamment le problème dans la solution imaginée précédente provient de ce que l'utilisation de l'appareil et le protocole de connexion sont effectués par un même microprocesseur. Par conséquent, ceci impose de mettre en mémoire de ce microprocesseur un programme d'instructions relatives à ce protocole et à l'utilisation. Or, l'emplacement des instructions relatives à ce protocole dans l'utilisation du client n'est pas à priori connu, et donc cela impose, soit que le client connaisse la norme, soit que le client fasse programmer son utilisation par le concepteur du dispositif de connexion du canal, ce qui est très lourd.

Par ailleurs, gérant à la fois le protocole et l'utilisation, le microprocesseur de l'appareil est moins performant que s'il ne gère qu'une des deux tâches.

La norme prévoit pour une liaison, par courant porteur, une vitesse de 2400 bauds, avec 66 octets par trame en nominal. Dans une liaison par paire torsadée, la vitesse de transmission est de 9600 bauds à 1,5 Mbit avec 256 octets par trame. Avec une liaison infrarouge, il est prévu 1200 bauds ou 2400 bauds, et 16 à 256 octets par trame respectivement, alors qu'en liaison radiofréquence, la vitesse de transmission est de l'ordre de 1 mégabit par seconde.

L'aptitude d'un microprocesseur à gérer une telle diversité de protocoles, compte tenu par ailleurs de la nécessité pour ces microprocesseurs de faire également marcher l'appareil relié au canal, conduit à un coût unitaire du dispositif de connexion de l'ordre de cinquante francs, même en production en grande quantité alors qu'un microprocesseur de faible coût, à trois ou quatre francs, serait suffisant pour faire fonctionner l'appareil. Dans ces conditions, cette solution n'est pas envisageable sauf pour les gros appareils ou les grosses installations. Elle ne peut par exemple pas correspondre à l'équipement d'une prise murale de courant électrique.

L'invention a pour objet de remédier à ces inconvénients, c'est-à-dire de rendre la norme transparente pour les utilisateurs, tout en abaissant par ailleurs le coût du point de connexion. Selon l'invention, on a résolu le problème en ayant recours à un circuit câblé relié d'une part au canal et relié d'autre part au microprocesseur de l'appareil. Ce circuit câblé présente comme différence avec ceux existant précédemment le fait qu'il soit programmable. Le principe de la programmation de ce circuit câblé de l'invention consiste, dans un tel dispositif de connexion, à prévoir dans ce circuit câblé deux registres intermédiaires. Un premier registre est destiné à des signaux de contrôle et un deuxième est destiné à des données. Chacun de ces registres comporte une partie dite émission et une partie dite réception encore que ces parties peuvent physiquement être confondues.

Lors de l'émission, une partie de chacun de ces registres est écrite, ses cellules sont programmées, par le microprocesseur de l'appareil. Puis ces cellules sont lues par un circuit du dispositif de l'invention relié au canal de transmission. Par opposition, pour la réception, les cellules de ces registres intermédiaires sont écrites par un circuit relié au canal de transmission et sont ensuite lues par le microprocesseur de l'appareil. Vue du côté de l'appareil, la gestion de ces registres (lecture ou écriture) est simple puisqu'elle emprunte une technique habituelle de lecture et d'écriture de registre de type informatique. Du côté du canal de transmission, le caractère câblé prend en charge toutes les difficultés d'adaptation de la transmission ou de la réception des informations entre le canal et le dispositif.

La particularité du registre intermédiaire de l'invention est par ailleurs de permettre une certaine adaptabilité du dispositif de connexion: de lui permettre notamment de s'auto-configurer en vitesse de transmission par exemple, ou en mode de codage (à parité paire ou impaire ou autre). Compte tenu des diverses situations dans laquelle peut se trouver le circuit câblé de l'invention, on se rend compte que le microprocesseur externe, en réception, ne sera sollicité, quand un message aura été reçu, que pour aller lire le contenu de ce message dans le registre de données et pour signaler que ce message aura été lu à l'issue de sa lecture. En émission le microprocesseur de l'appareil ne sera sollicité que pour indiquer au dispositif le destinataire de la transmission, ainsi que la teneur du message à transmettre. De ce point de vue les contraintes de la norme disparaissent totalement pour le concepteur d'un appareil. De ce fait, le microprocesseur à mettre en oeuvre dans cet appareil peut être très simple, son coût peut être très peu élevé, par exemple de trois ou quatre francs. Il résulte de cette manière de faire que la norme est complètement transparente pour l'utilisateur: il y souscrit sans le savoir.

L'invention a donc pour objet un dispositif de connexion d'un appareil à un canal de transmission de signaux comportant
- un premier circuit de couplage pour coupler le dispositif au canal en réception et en émission;
- un deuxième circuit, relié au premier circuit, pour traiter des bits reçus ou émis, et pour contrôler la conformité des signaux reçus ou émis à une norme préétablie; et
- un troisième circuit relié au deuxième circuit et à l'appareil, pour gérer des signaux transmis en fonction d'une utilisation propre à l'appareil; caractérisé en ce que
- le deuxième circuit comporte un registre de contrôle associé au type des signaux transmis ou à transmettre, et une mémoire tampon pour recevoir les signaux transmis ou à transmettre, et en ce que
- le troisième circuit comporte un microprocesseur exécutant sur les signaux transmis ou à transmettre des instructions chargées dans une mémoire programme de ce microprocesseur, en fonction de l'état de ce registre de contrôle.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : une représentation schématique d'un dispositif de connexion conforme à l'invention ;
- Figure 2 : une partie d'un traitement de détection, de contrôle de bit, et de contrôle de collision utilisé dans le deuxième circuit de l'invention ;
- Figures 3a et 3b : l'allure des signaux binaires à recevoir en provenance du canal ;
- Figure 4 : un schéma général du circuit de l'invention avec son interface de connexion au microprocesseur de l'appareil ;
- Figures 5, 6, 7 et 8 : des organigrammes d'actions à effectuer pendant, respectivement, une phase d'initialisation du circuit, une phase d'utilisation en réception, en émission, ainsi que pendant la mise en oeuvre d'un mode particulier de filtrage des signaux transmis.

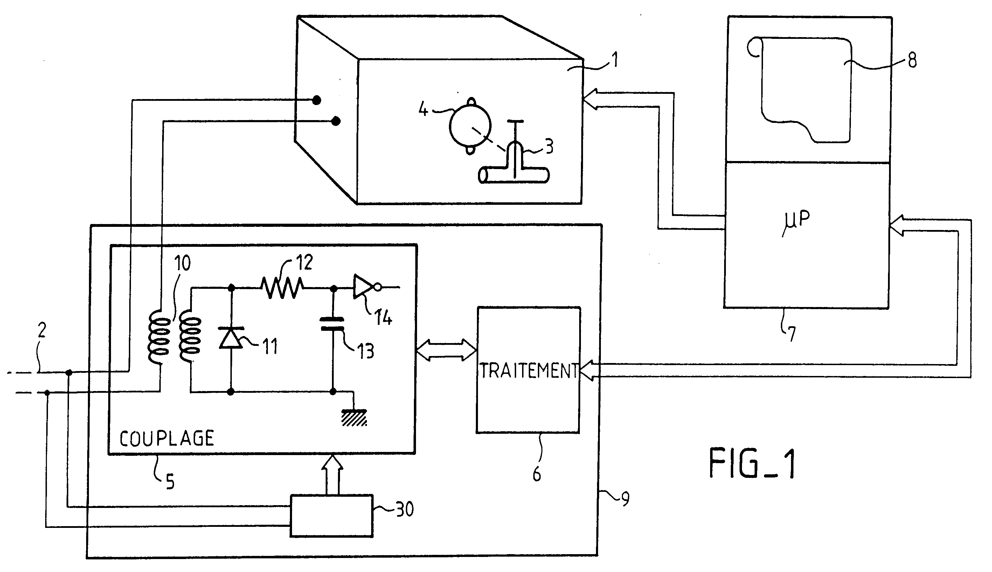

La figure 1 montre un appareil électrique 1 relié à un canal de transmission de signaux 2. Dans un exemple le canal 2 est une liaison par courant porteur, mais il pourrait être l'une quelconque des liaisons citées précédemment. L'appareil 1 comporte, d'une manière schématique, une électrovanne 3 manoeuvrée par un moteur 4 ou en variante tout organe de mesure. Le dispositif de connexion de l'invention comporte un premier circuit 5 de couplage pour coupler le dispositif au canal 2 en réception et en émission. On verra par la suite que ce circuit 5, dans certains cas sert également à mettre en forme des signaux sous une forme binaire. Ce circuit 5 est un circuit connu de l'état de la technique. Il délivre à l'appareil 1 ou reçoit de l'appareil 1 des signaux numériques. Le dispositif de connexion de l'invention comporte également un deuxième circuit 6 de traitement qui est relié, d'une part, au premier circuit 5 et d'autre part à un troisième circuit 7. Le deuxième circuit 6 sert à traiter les bits reçus ou émis, et sert à contrôler la conformité à la norme préétablie des signaux reçus ou à mettre en forme les signaux émis. Le troisième circuit 7 est par ailleurs relié à l'appareil 1. Ce troisième circuit 7 est incorporé à l'appareil 1. Le troisième circuit 7 est un microprocesseur et commande le moteur 4 de l'appareil 1. Le microprocesseur 7 possède une mémoire programmée 8 qui comporte les instructions qu'effectue le microprocesseur 7.

L'appareil 1 peut comporter le microprocesseur 7, ou un équivalent. Par exemple le dispositif de connexion de l'invention comportera de préférence deux cartes de connexion: une première carte 9 comportant le premier circuit de couplage 5 et le deuxième circuit de traitement 6, et une deuxième carte, comportant le microprocesseur 7. Dans la carte électronique 9, le circuit de couplage 5 pourra être remplacé par un circuit de couplage propre au canal utilisé. Compte tenu de l'existence de cinq canaux il y aura donc cinq variantes de la carte 9, éventuellement plus si d'autres canaux normalisés se révèlent être intéressants dans l'avenir.

Avant d'aller plus avant dans l'explication du dispositif de l'invention on va expliquer comment, dans un exemple, est effectuée une partie du traitement des signaux reçus. Dans le circuit de couplage 5, on prévoit un circuit de détection comportant ici schématiquement, un transformateur 10, une diode 11 en parallèle avec le secondaire du transformateur et un circuit RC, respectivement 12 et 13, en parallèle avec la diode. Ce circuit de détection permet de détecter la présence ou non d'une impulsion radiofréquence transmise par la ligne-secteur 2. Un inverseur 14, connecté au point milieu du circuit RC 12 13, permet de disposer des signaux transmis par le canal 2 sous une forme binaire. Le fonctionnement du circuit 5 est tel que la constante de temps du circuit RC est intermédiaire entre la fréquence du signal radiofréquence et celle du secteur. Dans le cas ou le mode binaire est bifréquence on utilise un montage du même type mais avec en plus des filtres à capacités commutées.

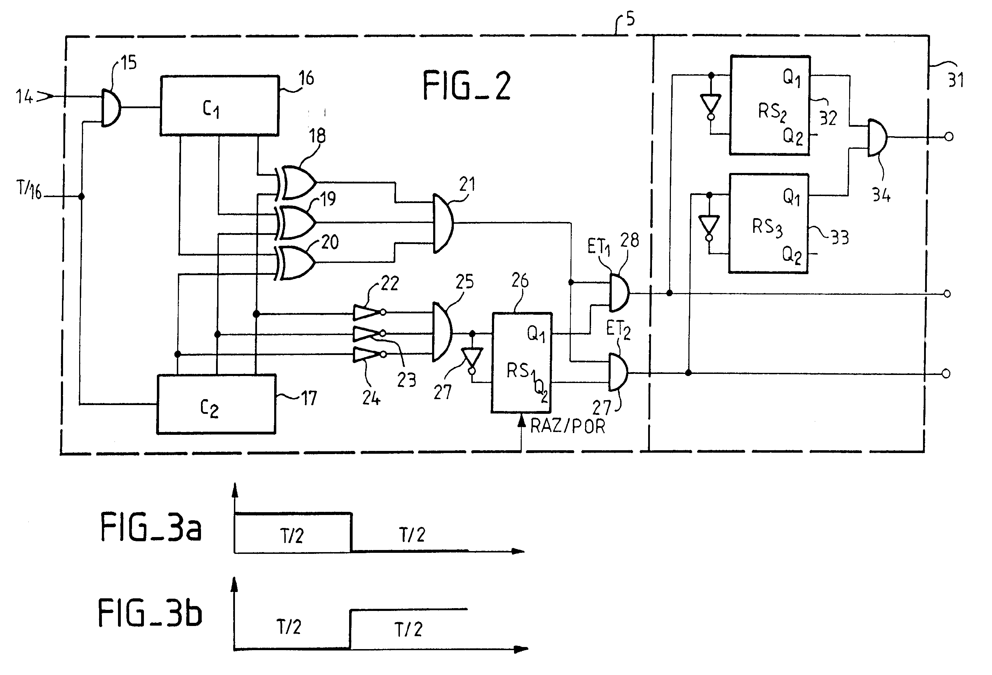

Les Figures 3a et 3d montrent l'allure de ces signaux quand ils représentent respectivement un 1 ou un 0. Si on repère le début du signal, un 1 est matérialisé par une transition descendante se produisant à peu près à moitié de la durée affectée à la transmission du bit. Par contre, un 0 est matérialisé par une transition montante.

Les traitements auxquels on doit se livrer ont pour but de montrer, que d'une part, on a reçu un 1 ou un 0 correct (que la transition s'est produite au bon moment), et que, d'autre part, à aucun moment la ligne n'a été le siège de deux émissions simultanées provenant d'origines diverses. Il s'agit d'effectuer un test de collision. En effet, si deux appareils utilisent une même ligne de transmission au même moment, leurs signaux vont être reçus ensemble par tous les appareils. Ceci va brouiller les réceptions.

Le principe de la détection et du contrôle des bits ainsi que du contrôle de collision est montré sur la figure 2. On pourrait néanmoins adopter d'autres principes de détection, celui qui va être décrit étant pratique mais non essentiel dans l'invention. Son fonctionnement est le suivant. Le signal numérique reçu dans le circuit de couplage 5 est transmis, en même temps qu'un signal d'horloge, sur une porte ET 15 de ce circuit 5. Le signal d'horloge présente, dans un exemple, seize impulsions d'horloge par durée T normalisée de bits reçus. Cette durée est fixée par la vitesse de transmission acceptée pour le canal 2. La porte ET 15 effectue donc un échantillonnage du signal binaire reçu qui se décompose ainsi normalement en huit échantillons à 1, suivis de huit échantillons à 0, s'il s'agit de recevoir un 1, ou l'inverse s'il s'agit de recevoir un 0. La porte ET 15 est reliée à un premier compteur C1 16 qui est un compteur à trois bits. Dans la pratique, ce compteur 16 est par exemple constitué par une succession de trois bascules RS montées en cascade. Possédant trois sorties, ce compteur présente sur ses trois sorties tous les états binaires successifs existants entre 000 et 111 avant de se remettre à 000 et de recommencer.

Dans le même temps que le signal 14 émanant de l'inverseur est transmis ainsi au compteur C1 16, le signal d'horloge lui-même est transmis à un deuxième compteur C2 17. Le compteur C2 17 est identique au compteur C1. Le compteur C2 compte et délivre sur ses trois sorties des états de sortie évoluant entre 000 et 111 puis recommence. Les sorties de ces compteurs 16 et 17 sont reliées aux entrées respectives de trois portes OU Exclusif 18 à 20. Les portes OU Exclusif 18 à 20 délivrent chacune en sortie un signal égal à 1 si les signaux introduits à leurs entrées sont identiques, et des signaux égaux à 0 dès qu'il y a discordance.

En conséquence, au moment de la réception d'un 1, les huit premiers échantillons à 1 du signal décompté par le compteur C1 16 se combinent avec les huit échantillons d'horloge décomptés par le compteur C2 17 pour produire en sortie des portes 18 à 20 des états 1 maintenus. Les portes 18 à 20 sont reliées aux entrées d'une porte ET 21 à trois entrées. Dans ces conditions la porte ET 21 délivre un signal 1 pendant la première partie de la réception d'un 1. Elle délivre un 0 par la suite. Les trois sorties du compteur C2 17 sont reliées par trois inverseurs 22 à 24, aux trois entrées d'une porte ET 25. Comme le compteur C2 17 compte de 000 à 111, les signaux à l'entrée de la porte 25 évoluent de 111 à 000. Autrement dit la sortie de la porte 25 ne délivre une impulsion qu'une fois sur huit: au moment de la transition. La porte ET 25 est reliée à une entrée d'une bascule RS1 26. L'autre entrée de cette bascule RS1 26 est reliée à la sortie de la porte 25 par l'intermédiaire d'un inverseur 27. En fonctionnement normal, le signal de sortie Q1 de la bascule RS1 26 se porte à 1 alors que la sortie Q2 se porte à 0. Le signal de sortie de la porte ET 21 est introduit sur chacune des entrées de deux portes ET respectivement 28 et 29. Les portes ET 28 et 29 reçoivent de plus, respectivement, les signaux des sorties Q1 et Q2 de la bascule RS1 26. En conséquence, la porte ET 28 délivre en sortie un signal valant 1 pendant la première demi-période de la réception du bit, et un signal valant 0 pendant la deuxième demi période : elle est le siège d'une transition négative. Par contre, la sortie de la porte 29 reste toujours nulle. Quand il s'agit de recevoir un 0 le fonctionnement est inverse, la porte 29 délivrant une transition montante au moment de la transition du bit 0. Pour organiser la synchronisation la bascule RS1 26, ainsi que celle d'autres circuits du dispositif de l'invention, ceux-ci reçoivent sur une entrée de remise à zéro un signal de remise à zéro POR (POWER ON RESET) à la mise sous tension. Ce signal POR est par exemple produit par un circuit 30 (figure 1) de type connu également couplé au canal de transmission.

Lorsqu'il y a collision, lorsqu'en pratique on reçoit deux fois huit échantillons à 1, on détecte cette anomalie de la manière suivante. Un circuit 31 de contrôle de collision comporte deux bascules RS2 et RS3, respectivement 32 et 33, connectées aux sorties des portes ET 28 et 29. Les bascules RS2 32 et RS3 33 sont montées de la même façon que la bascule 26 avec un inverseur entre leurs deux entrées. Les sorties Q1 de chacune de ces bascules 32 et 33 sont reliées à une porte ET 34. Sur la première demi-période la bascule RS2 32, montée à 1, reste à 1 tandis que la bascule RS3 33 monte à 1 sur la deuxième demi-période et reste également à 1. Dans ce cas la porte ET 34 délivre un 1 révélateur d'une collision. D'autres circuits de traitement et de contrôle de qualité du bit et de contrôle de collision sont envisageables, le but étant de disposer d'une part des signaux transmis, et d'autre part d'un signal de présence ou d'absence de collision ainsi que d'un signal de bonne qualité du bit si la transition se passe au bon moment. Le circuit 5 effectue donc bien la transformation analogique numérique ainsi que la délivrance des signaux de contrôle de bit et de collision. En émission le fonctionnement est similaire.

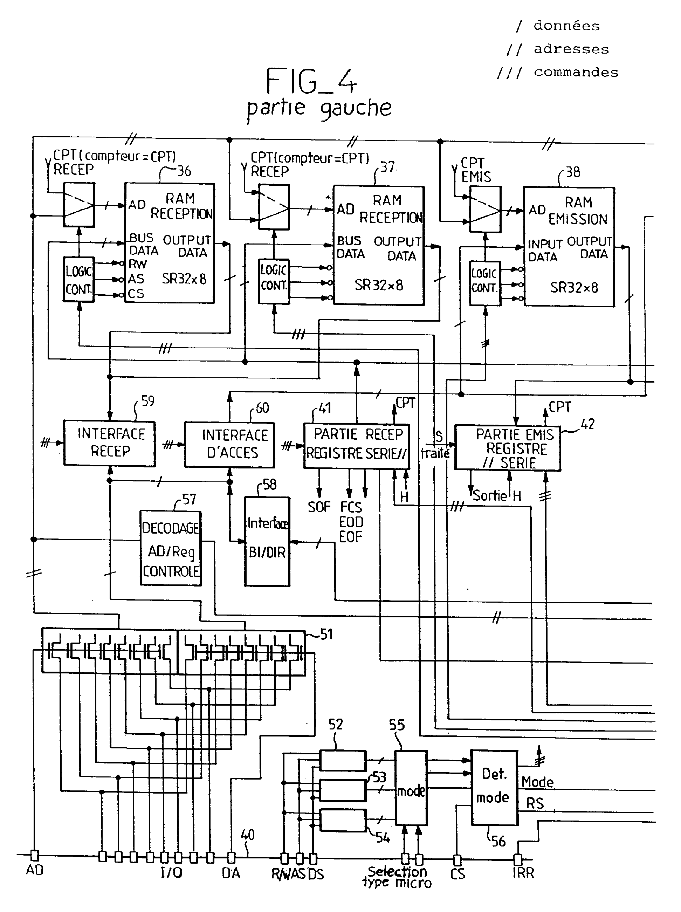

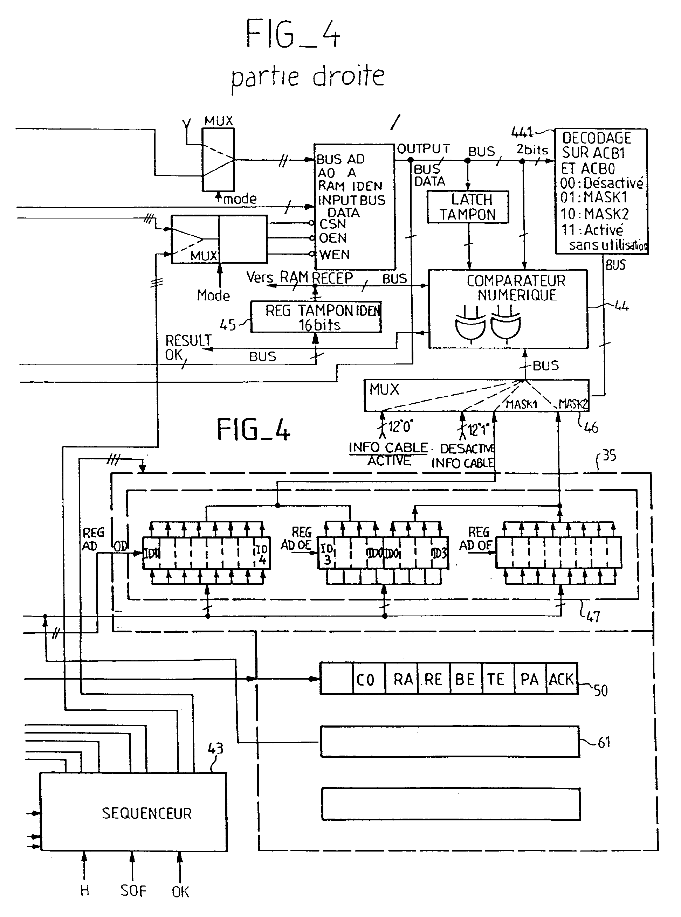

La figure 4 montre le diagramme général, dans le circuit 6 de traitement, des circuits spécifiques de l'invention. Ce circuit comporte essentiellement un registre de contrôle 35 et une mémoire tampon, représentée ici par les mémoires à accès aléatoire 36 à 39. La mémoire tampon comporte une zone réception constituée ici par les deux blocs mémoire 36 et 37. Dans un exemple, chacun d'eux est capable de stocker 32 octets La mémoire tampon comporte également une partie émission constituée ici également par 32 octets stockés dans le bloc 38. La mémoire tampon comporte également enfin une zone d'identification: le bloc 39, de même capacité, dont les cellules mémoire sont programmées, en initialisation, avec des données provenant du microprocesseur 7. Le contenu des cellules mémoire de la mémoire 39 est utilisé par le deuxième circuit, par la suite, en fonction d'une gestion propre à ce deuxième circuit.

Le circuit de la figure 4 comporte une interface de connexion 40 avec le microprocesseur 7 de l'appareil 1. Il comporte pour communiquer avec le circuit de couplage 5, une partie réception 41 et une partie émission 42 ayant pour fonction essentielle de transformer les signaux reçus, ou à émettre, sous une forme série en une forme parallèle, ou réciproquement. Les circuits 41 ou 42 sont essentiellement des convertisseurs série-parallèle ou parallèle-série dont le fonctionnement est piloté par un circuit séquenceur 43. Le circuit séquenceur 43 reçoit un signal d'horloge H ainsi, entre autres, qu'un signal de sélection de modes, dont on connaîtra le fonctionnement par la suite.

Le circuit de la figure 4 montre un certain nombre de liaisons barrées par une barre, deux barres ou trois barres. Ces liaisons sont sensées représenter, respectivement, des bus de données, des bus d'adresse, ou des bus de commande. La sélection de mode est liée au caractère émission ou réception de la liaison. Le registre de commande et les mémoires tampons évoquées précédemment sont susceptibles, dans un mode, d'être écrits, (programmés) par le microprocesseur 7, auquel cas les bus de données, d'adresse, et de commande sont pilotés par le microprocesseur 7. Ou bien dans un autre mode, ils peuvent être écrits à l'initiative du circuit séquenceur 43 et auquel cas ces bus sont gérés par ce circuit séquenceur 43. Il en est de même pour la lecture.

Pour recevoir, la procédure se passe de la manière suivante. Le signal reçu, en sortie du circuit 5, arrive en série sur une entrée du circuit de réception 41. De là, il est transmis en parallèle par le bus de données, d'une part dans les mémoires de réception 36 et 37, et d'autre part en direction d'un comparateur numérique 44 dont le but est de comparer l'identification du signal reçu à une identification préalablement chargée dans la mémoire 39. Cette comparaison permet de savoir si le circuit de la figure 4 est réellement le destinataire des informations transmises par le canal 2. En temps normal, en attente, le séquenceur 43 est par exemple configuré en mode réception: il a la maîtrise des bus de données, d'adresse, et de commande internes. Le signal reçu comporte, au début, un préambule. Ce préambule est interprété, d'une manière connue dans le circuit 41 comme un signal de début de trame dit SOF (START OF FRAME). Dans ce but le circuit 41 comporte un décodeur susceptible de produire un ordre SOF lorsqu'il reçoit une séquence binaire représentative d'un début de trame. Le signal SOF est utilisé pour mettre en oeuvre une séquence particulière du séquenceur 43. Dans celle-ci le séquenceur provoque, premièrement, le stockage dans un registre tampon 45 des seize bits d'identification reçus. Il provoque également, en même temps, la scrutation de la mémoire à accès aléatoire 39, couple d'octets par couple d'octets. Normalement, une identification est formée sur 12 bits. Elle peut être de longueur supérieure à 12. Ceci signifie qu'il reste 4 bits de disponibles normalement. On peut également utiliser un mot suivant pour un masquage.

Dans l'invention entre autres, on utilise au moins 2 bits de ces 4 bits disponibles pour stocker, en association avec l'identification de l'appareil 1, des conditions préalables de réception des signaux destinés à cet appareil. Ces 2 bits sont envoyés sur un circuit de décodage 441 relié à un multiplexeur 46. Le circuit 441 dans la pratique, est un circuit à mémoire à deux entrées et deux sorties. Ces deux bits peuvent néanmoins être utilisés directement et être envoyés sur le multiplexeur 46. Le multiplexeur 46 est en relation d'une part avec le comparateur numérique 44 et d'autre part avec un registre de masquage 47 comportant, par exemple, deux masques 48 et 49. Un masque est une succession de douze bits.

Le but du comparateur numérique 44 est de comparer l'identification contenue dans la mémoire d'identification 39 à l'identification temporaire reçue et stockée dans le registre tampon 45, sous des conditions imposées par un masquage délivré par le multiplexeur 46. Le masquage a pour objet de permettre la réception des informations si la comparaison bit à bit entre l'identification reçue et l'identification mémorisée est totalement réussie, partiellement réussie à un premier niveau, partiellement réussie à un deuxième niveau, ou, au contraire, d'accepter les signaux indépendamment du fait de savoir si le circuit est le destinataire ou non.

Dans la pratique, le comparateur 44 comporte des portes OU Exclusif recevant, d'une part, l'identification mémorisée et d'autre part, l'identification reçue. Ces portes OU Exclusif sont reliées chacune à une porte ET à laquelle est relié un des bits du masque retenu à la suite du décodage. Il y a donc, pour des identifications à 12 bits douze portes ET.

Lorsque la comparaison est effectuée avec succès le comparateur 44 délivre un signal OK reçu par le séquenceur 43. Ceci entraîne le lancement de la suite des opérations de ce séquenceur 43. Dans la pratique, la comparaison est immédiate. Les données reçues dans la trame sont alors orientées par le séquenceur 43, à partir du circuit 41, vers les mémoires tampon 36 et 37. Au fur et à mesure que les bits arrivent, ils sont écrits, en fonction d'ordres transmis par le bus de commande, dans ces mémoires tampons à des adresses incrémentées en fonction du signal de sortie CPT d'un compteur dépendant directement de cette partie réception 41: on assure ainsi une bonne synchronisation. Puis la réception des signaux de la trame se poursuit par la réception d'un signal dit FCS (FRAME CONTROLE SEQUENCE). Le séquenceur peut par ailleurs recalculer, sur la base des données reçues, un signal analogue au signal FCS. Les deux signaux sont comparés. En cas de discordance, on détermine qu'il y a une erreur de trame. L'information d'erreur de trame est inscrite dans le registre de contrôle de réception. Eventuellement, la trame comporte un signal de demande d'acquittement DACK nécessitant le renvoi par le circuit de la figure 4, sur le canal 2, d'un signal d'accusé de réception RACK. Après cet accusé de réception, le circuit de la figure 4 reçoit finalement un signal de fin de trame EOF (END OF FRAME). Les états de tous les signaux : SOF, OK, FCS, DACK, RACK, EOF sont stockés dans un registre de status reçu 50, en même temps que les éventuelles détection de collision et de contrôle de parité. Au moment de la réception, le registre 50 est écrit à l'initiative du séquenceur 43 qui pilote le bus de commande du registre de contrôle 35.

La réception du signal EOF provoque l'envoi, par le séquenceur 43, d'une interruption à destination du microprocesseur 7 de l'appareil 1. Celui-ci va donc devoir venir lire le contenu des mémoires 36, 37 et les interpréter à l'étude du contenu du registre de status reçu 50.

Pour ce faire, le microprocesseur 7 est relié par l'interface 40 au circuit de la figure 4, par un bus d'entrée/sortie I/O utilisable alternativement comme bus de données et bus d'adresse. Cette utilisation alternative est provoquée au moyen d'un multiplexeur 51 recevant deux signaux de commande: les signaux AD et DA. Le signal AD à l'état actif, entraînant un signal DA à l'état inactif, transforme l'interface d'entrée/sortie en une interface d'échange d'adresse. Dans le cas contraire, l'interface d'entrée/sortie devient une interface d'échange de données. Le multiplexeur 51 contient simplement des batteries de transistors montées en série entre ces entrées et les fils de bus de données et d'adresse du circuit de la figure 4. les transistors reçoivent respectivement sur leur grille de commande les signaux AD ou DA.

Les signaux de commande dits généralement RW, AS, DS de lecture/écriture, validation d'adresse, et validation de données respectivement, sont admis sur des entrées spécifiques de l'interface 40. Ils sont transcodés par des circuits de transcodage 52 à 54 dont le but est d'adapter ces signaux de commande, propres au microprocesseur 7, aux signaux de commande compris par le circuit de la figure 4. Les circuits 52 à 54 sont très simples puisqu'il n'y a que ces trois signaux à décoder. Les transcodeurs 52 à 54 sont reliés à un multiplexeur 55 qui permet de sélectionner celui de ces circuits de transcodage 52 à 54 qui sera utilisé, compte tenu de la nature du microprocesseur 7 de l'appareil 1. Le multiplexeur 55 reçoit donc deux signaux de sélection de type de microprocesseur, pour permettre de choisir laquelle des interfaces de transcodage 52 à 54 sera utilisée.

Le multiplexeur 55 est par ailleurs relié, dans un mode de réalisation, à un circuit 56 de détection de mode. Le microprocesseur 7 provoque la sélection du mode par l'utilisation d'un signal admis sur une entrée CS (CHIP SELECT) de l'interface 40. Périodiquement, ou à la demande, le microprocesseur 7 provoque l'envoi, sur le bus d'adresse I/O, de l'adresse du registre de status 50. Cette adresse est décodée par un décodeur d'adresse 57 du registre de contrôle 35 qui contient le registre de status 50. Le bus de données de ce registre de contrôle 35 est alors mis en relation avec une interface bidirectionnelle 58 reliée au bus de données de microprocesseur 7 par le multiplexeur 51. Par la suite les données lues dans le registre de status 50, et stockées dans l'interface bidirectionnelle 58, sont transmises au microprocesseur 7. Celui-ci peut ensuite provoquer la lecture des mémoires tampons 36 et 37 en adressant préalablement ces mémoires, octet par octet, et en lisant de la même façon au moyen d'une interface 59 de réception le contenu des octets reçus. L'interface de réception 59 comporte les circuits de lecture des mémoires 36 et 37. Elle est pilotée par le bus de commande. Celui-ci est à ce moment piloté par le microprocesseur 7. A la fin de la réception, le microprocesseur 7 provoque un autre changement de mode redonnant la main au séquenceur 43.

En émission, le fonctionnement est un peu similaire. Dans un premier temps le microprocesseur 7 prend la main sur le circuit de la figure 4. Par l'intermédiaire d'une interface d'accès 60, reliée au bus d'entrée de données de la mémoire d'émission 38 et de la mémoire tampon d'identification 39, le microprocesseur 7 charge ces mémoires tampon respectivement des données à émettre et de l'identité de leur destinataire. Ce chargement passe par un adressage alternatif de ces mémoires 38 et 39 et par application des commandes émises par le microprocesseur 7 sur le bus de commande. Ceci étant fait le microprocesseur 7 redonne la main au séquenceur 43 en provoquant d'une part un changement de mode et en lui envoyant en plus un ordre RS (REQUEST TO SEND). Cet ordre peut par ailleurs prendre l'allure d'un bit placé dans un état particulier dans le registre de contrôle 50. Au moment ou le séquenceur 43 reprend la main, il va lire la valeur de ce bit et suivant son état lance la séquence d'émission.

Dans ces cas le séquenceur 43 déclenche une séquence d'émission qui se compose des phases suivantes. Dans une première phase, le séquenceur provoque l'émission d'un préambule composé d'un symbole et d'un signal SOF, de début de trame. Le symbole et le signal de début de trame sont simplement produits par un circuit décodeur interne au séquenceur 43. Ce décodeur interne reçoit les signaux d'horloge et débite des niveaux de sortie en fonction de sa programmation préalable. Ce décodeur générateur de symbole et de signal de début de trame peut être constitué par un circuit du type programmable, "PLA", dont les entrées sont reliées aux sorties d'un compteur qui compte les impulsions du signal d'horloge. Le séquenceur 43 est lui-même conçu sur le même principe.

Dans la même séquence, à la fin de l'envoi de ce signal de début de trame, le séquenceur 43 adresse la mémoire d'identification 38 et lui fait transmettre à un convertisseur parallèle série 42 le contenu de la RAM d'émission incluant l'identification du destinataire. Normalement, on n'envoie que les douze bits de cette identification. La mémoire tampon 39 sert uniquement pour la réception afin de reconnaître les stations qui vont s'adresser à elle. Bien entendu les identifications des destinataires ne sont mémorisées dans la mémoire 39 aux mêmes endroits que les identifications relatives au microprocesseur 7 et à l'appareil 1. Cela pourrait néanmoins être possible si, à chaque changement de mode, on provoque le chargement adéquat de la mémoire 39. Lorsque les symboles ont été envoyés, on peut envoyer les signaux préalablement stockés dans la mémoire tampon 38. Celle-ci est alors adressée par le circuit séquenceur 43, et lue progressivement, et son contenu est envoyé au circuit d'émission parallèle-série 42. Les octets de la mémoire 38 sont lus et émis les uns après les autres en utilisant un compteur d'émission dont les sorties sont appliquées aux entrées d'adresse de la mémoire d'émission 38. Ce compteur d'émission est synchronisé avec le convertisseur 42. La sortie du convertisseur 42 est reliée à une partie émission du circuit de couplage 5 non représentée, mais de type connu.

Compte tenu de ce que la partie réception 41, qui continue à rester reliée à l'entrée de couplage 5 est capable de produire, en même temps que l'émission, les signaux de collision, de contrôle de trame, et de contrôle de bit, on se sert de cette partie 41, au moment de l'émission, pour programmer le registre de status 50. Celui-ci devient le registre de status du signal émis. Cette programmation est faite par le séquenceur 43. Au besoin on peut prévoir deux registres 50 différents: un servant pour l'émission et un servant pour la réception. Dans ce cas, le séquenceur 43 adressera, au moment de l'écriture de ces résultats dans ce registre de contrôle cet autre registre plutôt que le premier. Le fonctionnement présenté ci-dessus du circuit de contrôle de bit et de contrôle de collision a montré qu'il peut fonctionner du seul fait qu'il est relié au canal de transmission. Comme la sortie émission est reliée au canal de transmission, le signal émis est donc simultanément reçu sur le circuit 41 de l'émetteur. Le contrôle est alors immédiat.

Chacune des mémoires tampon 36 à 39 est montrée sur la figure 4 avec un multiplexeur d'adresse. Seule la logique de commande de la mémoire 39 est montrée avec un multiplexeur. Cette dernière indication est utilisée pour montrer le caractère alternatif des solutions présentées. Soit on a un seul bus de commande reliant les différentes entrées de commande du circuit de la figure 4, soit on a deux bus de commande des circuits provenant respectivement du microprocesseur 7 et du séquenceur 43. Ils sont mis localement en service, dans le deuxième cas, avec le signal de mode.

En ce qui concerne l'adressage, quand l'adressage est à la disposition du microprocesseur 7, il est effectué octet par octet à l'initiative de ce microprocesseur. Par contre, lorsqu'il est indépendant du microprocesseur 7, il est de préférence organisé à l'aide de compteurs déclenchés par les parties émission 42 ou réception 41. On peut cependant concevoir un séquenceur 43 plus important et capable d'effectuer également cet adressage.

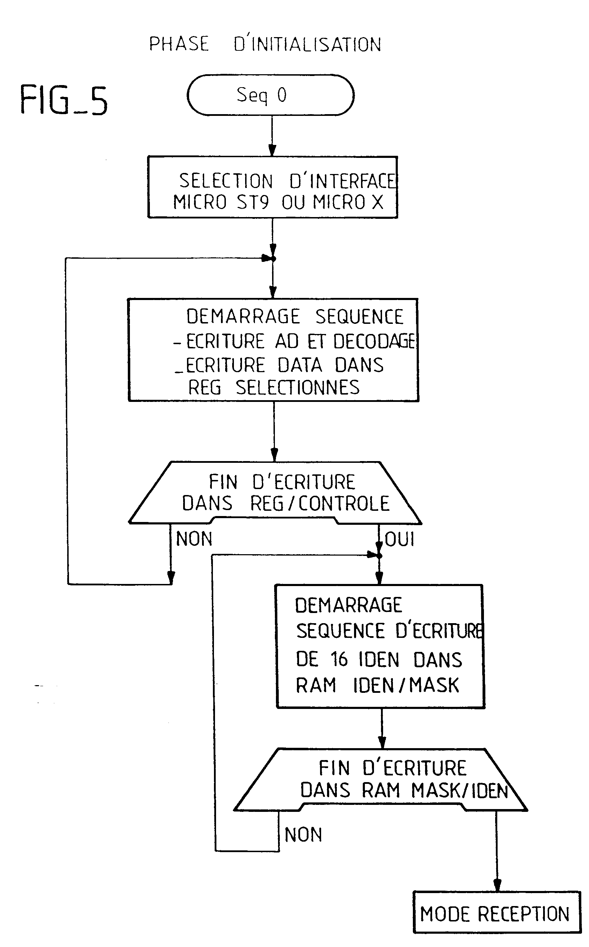

La figure 5 montre un organigramme de la phase d'initialisation du dispositif de l'invention, au moment de sa mise sous tension. La première opération à effectuer concerne la sélection d'interface permettant la bonne compréhension mutuelle des instructions du microprocesseur 7 avec le mode d'utilisation propre au circuit de la figure 4. Dans ce but, les différents protocoles utilisables sont signalés à l'utilisateur dans une brochure avec une correspondance, sur deux bits de sélection, à forcer à une valeur donnée de manière à mettre en service une des interfaces 52 à 54 utile.

Ceci étant fait, à l'initiative du microprocesseur 7 on va écrire dans le registre de contrôle 35, d'une part les masques 1 et 2 dans les parties 48 et 49 de ce registre et d'autre part, dans le registre de statuts reçu 50, un bit relatif à la réception RR (REQUEST TO RECEIVE) au niveau 1. On peut par ailleurs indiquer, dans un registre de configuration de vitesse et dans un registre de codage d'une part la vitesse et d'autre part le type de codage (par exemple Manchester) utilisé. Ces registres de configuration modifient le fonctionnement du séquenceur 43 de l'horloge. Tant que ceci n'est pas effectué on n'autorise pas un autre fonctionnement. Lorsque ceci est effectué on provoque, à l'initiative du microprocesseur 7, et en passant par l'interface 60, l'écriture d'une des identifications de l'appareil 1 dans la mémoire tampon d'identification 39. On continue par les autres identifications si on veut que plusieurs appareils puissent s'adresser à celui-ci. Lorsque ceci est terminé, le microprocesseur 7 provoque le passage en mode réception: le circuit 6 est sous les ordres du séquenceur 43 et prêt à réagir dès la détection d'un signal de début de trame.

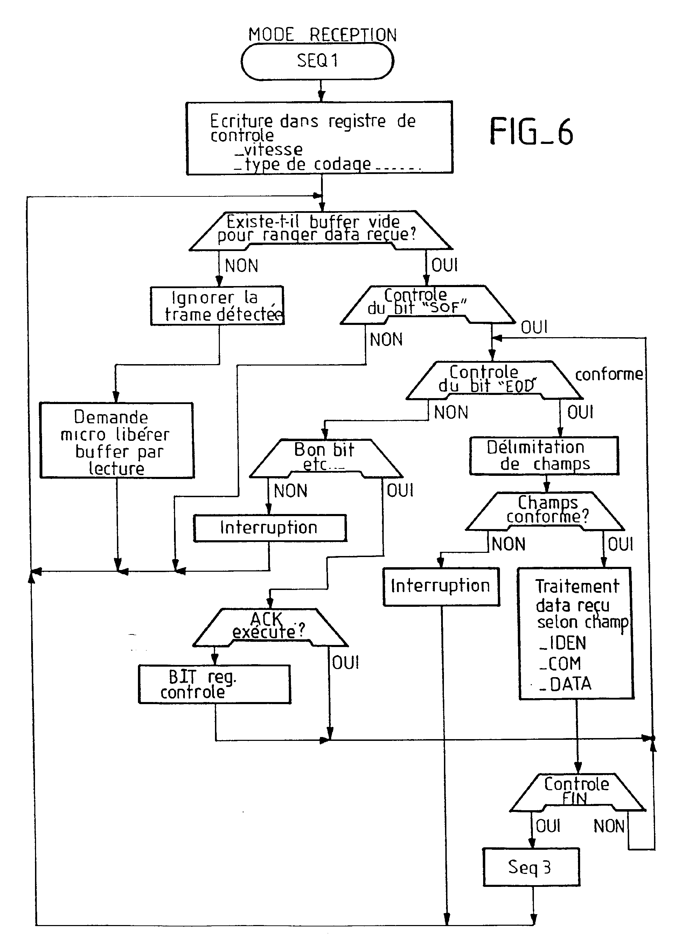

La figure 6 montre ce qui se passe pendant le mode réception. Dans un premier temps, alors par exemple qu'on ne reçoit rien, on regarde si les mémoires tampon de réception 36 et 37 sont vides afin de pouvoir y ranger des données à recevoir. Si ce n'est pas le cas, on provoque par le séquenceur 43 l'inscription d'une interruption dans un registre d'interruption 61 et on redonne la main au microprocesseur 7 afin qu'il effectue la libération des mémoires 36 et 37. Lorsque cela est effectué, on scrute à nouveau en mode réception, en permanence, l'apparition d'un signal de début de trame SOF. Dès qu'on en reçoit un, on effectue sur les signaux reçus, d'une part un contrôle de bit et un contrôle de collision et d'autre part un traitement. On reçoit de cette façon le signal d'identification et les données transmises. A la fin de la réception des données, on surveille à nouveau l'apparition du signal de fin de données EOD, FCS et EOF Si le bit n'est pas conforme en terme de durée, on va regarder s'il s'agit d'un viol de bit ou non.

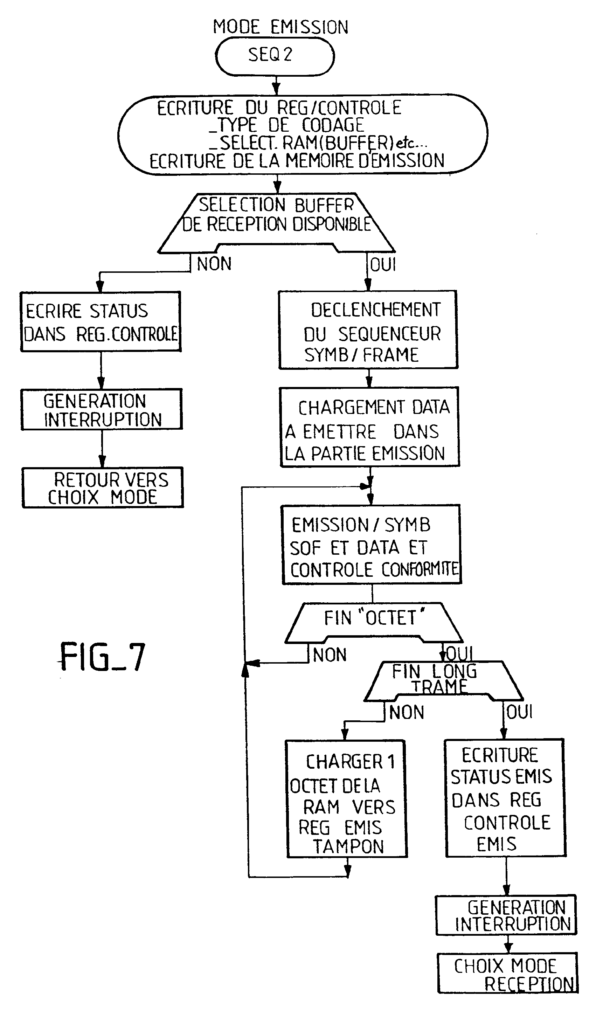

La Figure 7 montre les opérations effectuées en mode émission. Après avoir écrit, comme vu précédemment, la mémoire tampon d'émission, on écrit le registre de contrôle en indiquant le type de codage choisi et on sélectionne, dans la mémoire de réception, au moins un registre octet qui va servir de stockage de la trame émise. En effet on reçoit en même temps qu'on émet. Si une collision est détectée, ou si on a envoyé un 1 et on a reçu un 0 ou vice-versa, on écrit dans ce registre de contrôle qu'il y a collision de bit afin que le microprocesseur 7 puisse interpréter le message ou la réception.

Si un registre de réception est disponible dans la mémoire de réception 36 ou 37, on déclenche le séquenceur 43 pour qu'il émette le préambule constitué des symboles de début d'émission et du signal SOF. Puis on charge les données à émettre dans la partie émission 42. A la fin de l'émission de chaque octet on regarde si la fin de cet octet correspond à la fin de la trame émise. Si ce n'est pas le cas, on continue l'émission en prélevant un octet suivant de la mémoire d'émission et en l'émettant. Par contre, si c'est le cas, on vient écrire dans le registre status émis, un état d'émission positif. On provoque alors une interruption et le retour au mode réception.

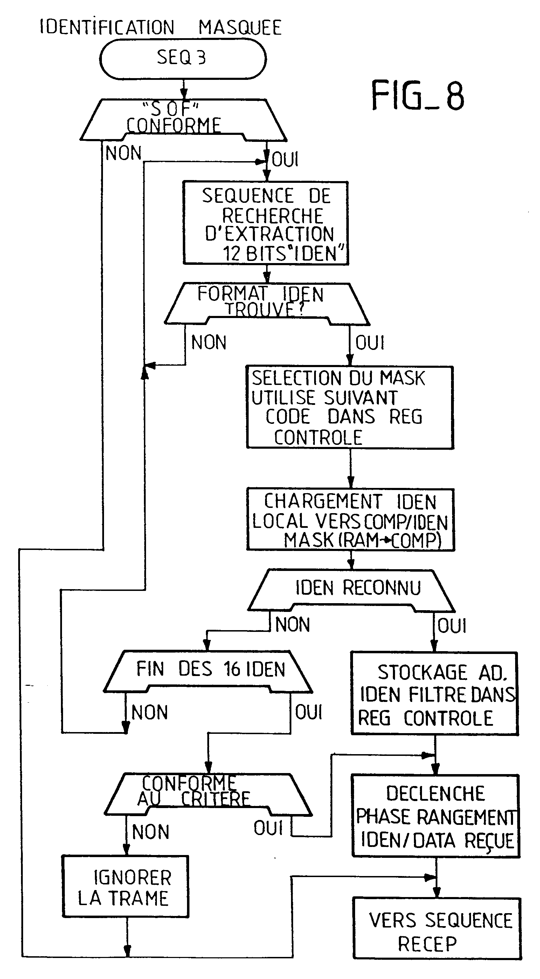

La figure 8 montre le fonctionnement de l'opération de masquage propre à l'invention. Si le signal de début de trame reçu est correct, on déclenche dans la mémoire tampon 39 la recherche de 12 bits d'identification. Dès qu'on a trouvé une identification, on regarde quel est le masque associé à cette identification (les deux derniers bits du mot de 16 bits contenant les 12 bits d'identification). On charge alors l'identification locale et l'identification reçue dans le comparateur 44 en même temps qu'avec le multiplexeur 46 on autorise le filtrage selon le masque décodé. Si l'identification reçue n'est pas reconnue, on recherche une autre identification, stockée à la suite dans la mémoire 39. Si, après avoir scruté les 16 identifications connues dans la mémoire 39, aucune ne correspond, on ignore la trame. Lorsqu'on reconnaît l'identification on stocke l'adresse de l'identification filtrée dans le registre de contrôle, et on déclenche la phase de mémorisation de l'identification de l'émetteur et des informations reçues. Par la suite on exécute la suite des opérations de réception.

## Revendications

1. Dispositif de connexion d'un appareil (1) à un canal (2) de transmission de signaux comportant
- un premier circuit (5) de couplage pour coupler le dispositif au canal en réception et en émission;
- un deuxième circuit relié (6), au premier circuit, pour traiter des bits reçus ou émis, et pour contrôler la conformité des signaux reçus ou émis à une norme préétablie; et
- un troisième circuit (7), relié au deuxième circuit et à l'appareil, pour gérer des signaux transmis en fonction d'une utilisation propre à l'appareil; caractérisé en ce que
- le deuxième circuit comporte un registre de contrôle (35) associé au type des signaux transmis ou à transmettre, et une mémoire tampon (36-39) pour recevoir les signaux transmis ou à transmettre, en ce que
- le troisième circuit comporte un microprocesseur (7) exécutant sur les signaux transmis ou à transmettre des instructions chargées dans une mémoire programme (8) de ce microprocesseur, en fonction de l'état de ce registre de contrôle (35), et en ce que
- ce dispositif comporte, entre le deuxième et le troisième circuit,
- un cinquième circuit d'interface (40, 52-55) pour adapter un protocole de commande spécifique au microprocesseur du troisième circuit à un protocole de commande du deuxième circuit, ce cinquième circuit étant muni d'un multiplexeur, ce multiplexeur étant programmable par deux signaux de sélection forcés par le troisième circuit.

2. Dispositif selon la revendication 1, caractérisé en ce que
- les premier et deuxième circuits sont montés sur un support (9), le troisième circuit étant monté sur un support annexe.

3. Dispositif selon l'une des revendications 1 à 2, caractérisé en ce que la mémoire tampon comporte
- une zone réception (36-37) dont les cellules mémoires sont programmées avec des données provenant du premier circuit (5), le contenu de ces cellules mémoires étant transmis au troisième circuit (7) consécutivement à des instructions émises par ce troisième circuit,
- une zone émission (38) dont les cellules mémoires sont programmées avec des données provenant du troisième circuit (7), le contenu de ces cellules mémoires étant transmis au premier circuit (5) consécutivement à des instructions émises par le deuxième circuit,
- et une zone identification (39) dont les cellules mémoires sont programmées, en initialisation, avec des données du troisième circuit (7), le contenu de ces cellules mémoires étant transmis au premier circuit consécutivement à des instructions émises par ce deuxième circuit.

4. Dispositif selon l'une des revendications 1 à 3, caractérisé en ce qu'il comporte
- dans la mémoire tampon, une zone d'identification (39) dont les cellules mémoires sont programmées avec des données relatives d'une part à l'identification d'un destinataire des signaux transmis, et d'autre part à un mode de filtrage de ces signaux imposé pour ce destinataire,
- dans le registre de contrôle, des registres (47) de filtrage programmés avec des données de filtrage,
- un quatrième circuit (44) de comparaison pour comparer cette identification de destinataire avec une identification reçue en fonction des données de filtrage qui correspondent au mode de filtrage imposé pour ce destinataire.

5. Dispositif selon l'une des revendications 1 à 4, caractérisé en ce qu'il comporte dans le registre de contrôle, deux parties:
- une partie réception dont les cellules mémoires sont programmées avec des données produites par le deuxième circuit, le contenu de ces cellules mémoires étant transmis au troisième circuit consécutivement à des instructions émises par le troisième circuit, et
- une partie émission dont les cellules mémoires sont programmées avec des données provenant du deuxième ou du troisième circuit, le contenu de ces cellules mémoires étant transmis au troisième circuit consécutivement à des instructions émises par ce deuxième et/ou ce troisième circuit.

6. Dispositif selon l'une quelconque des revendications 1 à 5, caractérisé en ce que le deuxième circuit comporte plusieurs registres (56,61).

7. Dispositif selon l'une quelconque des revendications 1 à 6, caractérisé en ce que le deuxième circuit comporte un compteur (CPT) relié à un circuit de conversion parallèle série pour synchroniser, en émission, des incréments d'adresses de lecture de données dans la mémoire tampon avec l'émission de ces signaux.

8. Dispositif selon l'une quelconque des revendications 1 à 7, caractérisé en ce que le deuxième circuit comporte un compteur (CPT) relié à un circuit de conversion série parallèle pour synchroniser, en réception, des incréments d'adresses d'écriture de données dans la mémoire tampon avec la réception des signaux reçus.

## Patentansprüche

1. Vorrichtung zum Anschluß eines Geräts (1) an einen Signalübertragungskanal (2), umfassend
- eine erste (Koppel-)Schaltung (5) zum Koppeln der Vorrichtung an den Kanal bei Empfang und Übertragung;
- eine zweite, mit der ersten Schaltung verbundene Schaltung (6) zum Verarbeiten der empfangenen oder übertragenen Bits sowie zum Steuern der Übereinstimmung der empfangenen oder übertragenen Signale gemäß einer vorbestimmten Norm; und
- eine dritte, mit der zweiten Schaltung und dem Gerät verbundene Schaltung (7) zum Verwalten der übertragenen Daten in Abhängigkeit von einer für das Gerät charakteristischen Verwendung;
dadurch gekennzeichnet, daß
- die zweite Schaltung ein mit der übertragenen oder zu übertragenden Signalart verknüpftes Steuerregister (35) sowie einen Pufferspeicher (36-39) zum Empfangen der übertragenen oder zu übertragenden Signale umfaßt, daß
- die dritte Schaltung einen Mikroprozessor (7) umfaßt, der über die übertragenen oder zu übertragenden Signale in Abhängigkeit von dem Zustand dieses Steuerregisters (35) in einem Programmspeicher (8) dieses Mikroprozessors gespeicherte Befehle ausführt, und daß
- die Vorrichtung zwischen der zweiten und der dritten Schaltung
- eine fünfte (Schnittstellen-)Schaltung (40, 52-55) zum Anpassen eines dem Mikroprozessor der dritten Schaltung eigenen Steuerprotokolls an ein Steuerprotokoll der zweiten Schaltung, wobei diese fünfte Schaltung mit einem Multiplexer versehen ist, der durch zwei von der dritten Schaltung vorgegebene Auswahlsignale programmierbar ist.

2. Vorrichtung nach Anspruch 1, dadurch gekennzeichnet, daß
- die erste und die zweite Schaltung auf einem Träger (9) angebracht sind, während die dritte Schaltung auf einem Nebenträger angebracht ist.

3. Vorrichtung nach einem der Ansprüche 1 bis 2, dadurch gekennzeichnet, daß der Pufferspeicher
- einen Empfangsbereich (36-37), dessen Speicherzellen mit aus der ersten Schaltung (5) stammenden Daten programmiert sind, wobei der Inhalt dieser Speicherzellen zur dritten Schaltung (7) in Folge auf durch diese dritte Schaltung ausgegebene Befehle übertragen wird,
- einen Sendebereich (38), dessen Speicherzellen mit aus der dritten Schaltung (7) stammenden Daten programmiert sind, wobei der Inhalt dieser Speicherzellen zur ersten Schaltung (5) in Folge auf durch die zweite Schaltung ausgegebene Befehle übertragen wird, und
- einen Indentifikationsbereich (39) umfaßt, dessen Speicherzellen ursprünglich mit Daten aus der dritten Schaltung (7) programmiert sind, wobei der Inhalt dieser Speicherzellen zur ersten Schaltung in Folge auf durch diese zweite Schaltung ausgegebene Befehle übertragen wird.

4. Vorrichtung nach einem der Ansprüche 1 bis 3, gekennzeichnet durch
- einen im Pufferspeicher vorgesehenen Identifikationsbereich (39), dessen Speicherzellen mit Daten programmiert sind, die sich zum einen auf die Identifikation eines Empfängers der übertragenen Daten sowie zum anderen auf eine Art der Filterung dieser für diesen Empfänger vorgesehenen Signale beziehen,
- im Steuerregister vorgesehene, mit Filterdaten programmierte Filterregister (47),
- eine vierte (Vergleicher)-Schaltung (44) zum Vergleichen dieser Identifikation des Empfängers mit einer Identifikation, die in Abhängigkeit der Filterdaten empfangen wurde, die der für diesen Empfänger vorgesehenen Filterart entsprechen.

5. Vorrichtung nach einem der Ansprüche 1 bis 4, dadurch gekennzeichnet, daß sie im Steuerregister zwei Bereiche umfaßt:
- einen Empfangsbereich, dessen Speicherzellen mit durch die zweite Schaltung erzeugten Daten programmiert ist, wobei der Inhalt dieser Speicherzellen an die dritte Schaltung in Folge auf von der dritten Schaltung ausgegebene Befehle übertragen wird, und
- einen Sendebereich, dessen Speicherzellen mit von der zweiten oder dritten Schaltung stammenden Daten programmiert ist, wobei der Inhalt dieser Speicherzellen an die dritte Schaltung in Folge auf von dieser zweiten und/oder dritten Schaltung ausgegebene Befehle übertragen wird.

6. Vorrichtung nach einem beliebigen der Ansprüche 1 bis 5, dadurch gekennzeichnet, daß die zweite Schaltung mehrere Register (56, 61) umfaßt.

7. Vorrichtung nach einem beliebigen der Ansprüche 1 bis 6, dadurch gekennzeichnet, daß die zweite Schaltung einen mit einer Parallel-Seriell-Umwandlungsschaltung verbundenen Zähler (CPT) zum bei der Übertragung erfolgenden Synchronisieren von Inkrementen von Daten-Leseadressen in dem Pufferspeicher mit der Übertragung dieser Signale umfaßt.

8. Vorrichtung nach einem beliebigen der Ansprüche 1 bis 7, dadurch gekennzeichnet, daß die zweite Schaltung einen mit einer Seriell-Parallel-Umwandlungsschaltung verbundenen Zähler (CPT) zum beim Empfang erfolgenden Synchronisieren von Inkrementen von Daten-Schreibadressen in dem Pufferspeicher mit dem Empfang der empfangenen Signale umfaßt.

## Claims

1. Device for connecting an appliance (1) to a signal transmission channel (2) including
- a first coupling circuit (5) for coupling the device to the channel in reception and transmission;
- a second circuit (6) connected to the first circuit for processing bits received or transmitted, and for checking that the signals received or transmitted conform to a pre-established standard; and
- a third circuit (7), connected to the second circuit and to the appliance, for managing signals transmitted in accordance with usage peculiar to the appliance;
characterised in that
- the second circuit includes a check register (35) associated with the type of signals transmitted or to be transmitted, and a buffer memory (36-39) for receiving the signals transmitted or to be transmitted, in that
- the third circuit includes a microprocessor (7) executing, on the signals transmitted or to be transmitted, instructions loaded in a program memory (8) of this microprocessor, according to the state of this check register (35), and in that
- this device includes, between the second and third circuits,
- a fifth interface circuit (40, 52-55) for adapting a control protocol specific to the microprocessor of the third circuit to a control protocol for the second circuit, this fifth circuit being provided with a multiplexer, this multiplexer being programmable by two selection signals forced by the third circuit.

2. Device according to Claim 1, characterised in that
- the first and second circuits are mounted on a support (9), the third circuit being mounted on an additional support.

3. Device according to one of Claims 1 to 2, characterised in that the buffer memory includes
- a receiving area (36-37), in which the memory cells are programmed with data coming from the first circuit (5), the contents of these memory cells being transmitted to the third circuit (7) following upon instructions transmitted by this third circuit,
- a transmission area (38) in which the memory cells are programmed with data coming from the third circuit (7), the contents of these memory cells being transmitted to the first circuit (5) following upon instructions transmitted by the second circuit, and
- an identification area (39) in which the memory cells are programmed, in initialisation, with data from the third circuit (7), the contents of these memory cells being transmitted to the first circuit following upon instructions transmitted by this second circuit.

4. Device according to one of Claims 1 to 3, characterised in that it includes
- in the buffer memory, an identification area (39) in which the memory cells are programmed with data relating on the one hand to the identification of an addressee of the signals transmitted, and on the other hand to a mode of filtering these signals required for this addressee,
- in the check register, filtering registers (47) programmed with filtering data,
- a fourth comparator circuit (44) for comparing this addressee identification with an identification received in accordance with the filtering data which correspond to the filtering mode required for this addressee.

5. Device according to one of Claims 1 to 4, characterised in that it includes, in the check register, two parts:
- a reception part in which the memory cells are programmed with data produced by the second circuit, the contents of these memory cells being transmitted to the third circuit following upon instructions transmitted by the third circuit, and
- a transmission part in which the memory cells are programmed with data coming from the second or third circuit, the contents of these memory cells being transmitted to the third circuit following upon instructions transmitted by this second and/or this third circuit.

6. Device according to any one of Claims 1 to 5, characterised in that the second circuit includes several registers (56, 61).

7. Device according to any one of Claims 1 to 6, characterised in that the second circuit includes a counter (CPT) connected to a parallel/serial conversion circuit for synchronising, in transmission, increments of addresses for reading data in the buffer memory with the transmission of these signals.

8. Device according to any one of Claims 1 to 7, characterised in that the second circuit includes a counter (CPT) connected to a serial/parallel conversion circuit for synchronising, in reception, increments of addresses for writing data in the buffer memory with the reception of the signals received.
